Europäisches Patentamt

(19) European Patent Office

Office européen des brevets

(11) Publication number: **0 138 381**
**B1**

## (12) EUROPEAN PATENT SPECIFICATION

(45) Date of publication of patent specification: **28.06.89**

(51) Int. Cl.⁴: **G 11 B 7/26**

(21) Application number: **84306254.8**

(22) Date of filing: **13.09.84**

(54) Process for forming a protective coating on an information storage device.

(30) Priority: **16.09.83 US 533096**

(43) Date of publication of application:
**24.04.85 Bulletin 85/17**

(45) Publication of the grant of the patent:
**28.06.89 Bulletin 89/26**

(84) Designated Contracting States:
**AT BE CH DE FR GB IT LI LU NL SE**

(56) References cited:
**EP-A-0 063 439**
**EP-A-0 072 378**
**DE-A-3 202 821**
**DE-A-3 224 647**

(73) Proprietor: **ROHM AND HAAS COMPANY**
**Independence Mall West**
**Philadelphia Pennsylvania 19105 (US)**

(72) Inventor: **Rounds, Nicholas Andrew**
**271 Tamenend Avenue**
**New Britain, Pa. 18901 (US)**

(74) Representative: **Angell, David Whilton et al**
**ROHM AND HAAS (UK) LTD. European**
**Operations Patent Department Lennig House 2**
**Mason's Avenue**
**Croydon CR9 3NB (GB)**

Courier Press, Leamington Spa, England.

## Description

This invention is concerned with a process for forming a protective coating on an information storage device especially with the formation of optically transparent polymeric dust barrier coatings for information discs. Although this invention will hereinafter be described in terms of an information disc, it should be understood that the information storage device may have a shape other than that of a disc and such other shape is included in the scope of this invention.

Information storage discs may be prepared by using, for example, a laser to mark the surface of the disc with a retrievable information code. This marking may take the form of pits, a number of which may form a byte. In the interest of clarity and simplicity, the marks on the disc surface will herein be referred to as pits and the term "byte" may include a plurality of pits although the invention is not to be construed as limited to a marking which forms only pits. An information disc may contain, for example, several billion (i.e. several thousand million pits per disc. Each pit or series of pits represents a letter or a number. When the information is to be read from the disc, such reading is generally done by laser. The laser may be the same one which has been used to burn the information into the disc or may be a different laser. The laser uses converging light to read the pits of the disc. It therefore becomes important that the laser be focused properly so that the light will converge on ·the surface of the disc. If the laser is not focused properly or if a foreign object, such as a fine dirt particle, is on the surface of the disc then the pit will be obscured and will not be read by the laser. This will then affect the retrieval of information from the disc. Because the laser uses converging light, it has become common practice to cover the surface of the disc with an optically transparent polymeric protective layer to keep dust and other foreign matter from the disc surface. Because the reading laser utilizes converging light, which is wide as it enters the polymeric protective layer, any dust will not adversely affect the reading of the disc since it will be focused past the dust on the protective layer and directly on the pit.

The polymeric protective layer must itself be perfectly flat and optically transparent. If the coating is not flat, then the focus of the laser onto the disc surface is adversely affected.

In conventional processes, when the polymeric protective layer is formed on the disc itself, the disc is rotated and a radiation curable coating is poured onto the disc. Centrifugal force throws the coating out toward the edges of the disc, and in this manner the disc is coated and the casting is then radiation cured. Such a process is described in EP—A—0 072 378.

The disadvantage of this process is that, because of the centrifugal force, the coating assumes a wedge shape and develops waves, much as waves develop when a pebble is dropped into a still pool of water. In order to eliminate these waves, it is necessary to allow the coating to remain uncured for a long time on the stationary disc to allow these waves to flow out. However, because of the centrifugal force, the wedge, which was formed because of such force, collapses and forms its own waves which keep oscillating and require extended periods of time to flow out. Thus, there are two wave formation when this process is used. The first waves, which flow out quickly, are those which have been formed by the stream of liquid onto the disc surface and the second waves, which require a long time to dissipate, are those which have been formed due to collapse of the wedge-shaped coating which had been formed through centrifugal force.

Once all waves have dissipated from the disc, the coating is then exposed to radiation, such as UV light, and becomes a solid, flat, optically transparent coating.

Information storage devices having, on one surface thereof, a protective layer of an organic material are disclosed in DE—A—3202821. The patent, however, does not acknowledge the above-mentioned need to form a protective layer that is perfectly flat nor does it acknowledge the above-mentioned disadvantage of conventional processes, for applying the protective layer in which the information storage device is rotated.

We have now found a process in which the time required for the coating to become flat before curing can be minimised.

This invention comprises a process for forming an optically transparent polymeric protective layer on the surface of an information storage device which comprises, placing the device with the surface to be treated in a stationary horizontal position, applying a liquid radiation curable coating composition to the stationary surface from an applicator distanced from and above said surface and preferably at a distance of up to 25 cm therefrom, applying said coating composition by equally spaced sequential movement of said applicator on a plane parallel to said surface, allowing said liquid coating composition to spread evenly across said surface, and curing the resulting coating by means of radiation to form a thin, even, optically transparent polymeric protective layer over said surface.

It is surprising that an optically transparent polymeric protective layer for an information disc can be prepared by maintaining the disc in a stationary horizontal position while moving the applicator containing the radiation curable coating composition and that when the coating is applied to the disc in this manner, the time required for the waves to dissipate and for the coating to become completely flat is greatly minimized.

The radiation curable coating composition may consist of radiation curable monomer(s) or it may also contain other components such as oligomer, photoinitiator if ultra violet radiation is to be used to cure the composition, surfactant, flow aid to assist the composition in flowing across the surface of the information storage disc and stabilizer.

Any radiation curable monomer may be used which will give an optically transparent layer when cured. Generally useful is any ethylenically unsaturated monomer which is capable of being cured into an optically transparent layer. Among the monomers which may be used are acrylates and methacrylates which are free radical polymerizable and which have one or more ethylenically unsaturated groups, vinyl monomers and allyl monomes, vinyl ethers, N-vinyl monomers, and epoxy monomers which polymerize by means of a cationic ring opening. The vinyl ether, N-vinyl monomers and epoxy monomers may be used in conjunction with cationic photoinitiator as is disclosed in U.S. Patents 4,108,747; 4,102,687; 4,058,401; and 4,058,400.

Among the preferred monomers are pentaerythritol tetraacrylate and triacrylate, tris(2-acryloxyethyl)isocyanurate, tris(2-methacryloxyethyl)-isocyanurate, 2-acetoxyethyl methacrylate, tetrahydrofurfurylmethacrylate, diacetone acrylamide, acrylamidoethyl methacrylate 1,6-hexane diol diacrylate, tetra ethylene glycol diacrylate, 1,4-butane diol dimethacrylate, tripropylene glycol diacrylate, diethylene glycol diacrylate, diethylene glycol dimethacrylate, ethylene glycol diacrylate, neopentyl glycol diacrylate, butyl acrylate, isobutyl acrylate, butyl methacrylate, glycidyl acrylate, glycidyl methacrylate, isobornyl acrylate, cyclohexyl acrylate, phenyl acrylate, tertiary-butyl acrylate, trimethylol propane triacrylate and glycerol triacrylate.

The monomer may make up from 20 to 100 percent by weight of the radiation curable coating composition.

An oligomer may be present in the coating composition in an amount of 0 to 60 percent by weight of the entire composition. Suitable oligomers include halogenated oligomeric ester acrylates, acrylated urethanes, acrylated epoxys, or methacrylate oligomer which is compatible with the monomer set forth above. The oligomer must also be compatible with any initiator which may be present.

Particularly suitable oligomers are halogenated polyester acrylates such as those disclosed in U.S. Patent 4,227,978.

The radiation curable coating composition may also contain from 0.1 to 12 percent by weight of photoinitiator if the coating is to be cured by ultra violet. Among suitable initiators are organic peroxides, azo compounds, aromatic diazonium salts, aromatic iodonium salts, aromatic sulfonium salts, aromatic phosphonium salts, quinones, benzophenones, nitroso compounds, acryl halides, aryl halides, hydroazones, mercapto compounds, pyrylium compounds, triaylimidazoles, biimidazoles and chloroalkyltriazines. Such photoinitiators are well known in the art.

From 0 to 5 percent by weight of a surfactant may also be present included in the composition. Among the suitable surfactants are alkylphenolethylene oxide condensates such as the Triton surfactant series manufactured by Rohm and Haas Company; non-ionic acetylenic glycols such as the Surfynol surfactant series obtainable from Air Products and Chemical Inc., hydro-carbonfluorocarbon block oligomers such as the Fluorad surfactant series obtainable from Minnesota Mining and Manufacturing Co.

Flow aids may often be present in the compositions in amounts of up to 5 percent by weight. Among the suitable flow aids are acrylic Modaflow and Multiflow polymers obtainable from Monsanto Corporation and Byk 300 series, of flow aids obtainable from Byk-Mallinckrodt Corporation.

If desired, a stabilizer may be present in the coating composition in an amount of up to 1 percent by weight in order to prevent premature polymerization of the monomer-containing coating composition during storage.

Among suitable stabilizers are hydroquinone and its ethers and phenothiazine.

If desired, an epoxide or other cationic polymerizable material may be used as the monomer in the coating compositions used in this invention. The epoxide may usually be used in an amount of up to about 95 percent by weight of the composition in which case the balance will at least in part comprise photoinitiator. Among the epoxides which may be used are 3,4-epoxycyclohexylmethyl 3,4-epoxycyclohexanecarboxylate obtained from Union Carbide Company, Epon 828 (a polymer produced by the condensation reaction of epichlorohydrin with bisphenol A) obtainable from Shell Chemical Company.

The coating composition preferably has a viscosity of 0.005 to 0.5 Pas (5 to 500 cps).

The process of this invention may be practiced by placing the liquid radiation curable coating composition in a reservoir which is equipped with an electric motor and a nozzle through which the coating composition is applied. The electric motor is connected to the applicator to enable the applicator to move in various directions. In order to avoid the splashing of the coating composition beyond the information disc surface, the applicator, through which the coating is applied, is preferably kept at a maximum distance of up to about 25 centimeters above the surface of the information storage disc. The movement of the applicator may be any suitable movement such as from side to side or in a spiral manner e.g. a repeated incremental spiral manner. The movement is spaced so that the coating, when applied to the surface of the information storage disc, will spread across part of the surface and will meet the coating which has been applied on another part of the information storage disc. Preferably, the coating is applied in an outwardly spiral manner.

After the coating is applied to the information storage disc, it is allowed to sit for a period of from about 1 minute to about 30 minutes to allow the waves to flow out of the coating so that the coating, prior to being cured, is flat.

After the waves have dissipated from the coating, the storage information disc which has been coated is then exposed to radiation such as ultra violet radiation, electron beam radiation, or visible light radiation and the like and the coating is thereby formed into a hard, cured optically transparent coating.

The following Example more specifically describes, for the purpose of illustration only, one embodiment of the invention.

Example

An information disc blank measuring 36 cm (14 inches) in diameter is placed on a platform. Suspended above the information disc is a movable coating device which comprises a reservoir in which the liquid coating composition is deposited, a nozzle through which the coating composition is applied to the information disc and an electric motor to move the nozzle in a spiral manner. The tip of the nozzle, through which the coating composition is applied to the disc, is maintained at a distance of 8 centimeters above the surface of the disc. A coating composition containing, by weight, 96.9 percent of neopentyl glycol di(beta-acryloxypropionic acid), 3.0 percent of 1-hydroxy cyclohexyl phenyl ketone (a photoinitiator) and 0.1 percent of Fluorad FC-430 (surfactant) is placed in the reservoir. The nozzle is opened and the electric motor actuated so that the nozzle moves in a spiral manner and deposits a stream of the coating composition across the disc. The nozzle moves so that the stream of coating composition is deposited on the disc 9 millimeters from the previous and subsequent deposition of the coating composition on the disc. The coating composition spreads across the surface of the disc and is allowed to stand quiescent for 5 minutes to allow the waves to flow out. The coating composition is then cured using ultra violet radiation. A flat optically transparent polymeric protective layer which adheres to the disc is obtained.

The following words are trademarks which may be registered in some or all of the designated states: Triton, Sunfynol, Fluorad, Modaflow, Multiflow, Byk, Epon.

**Claims**

1. A process for forming an optically transparent polymeric protective layer on the surface of an information storage device which comprises, placing the device with the surface to be treated in a stationary horizontal position, applying a liquid radiation curable coating composition to the stationary surface from an applicator distanced from and above said surface, applying said coating composition by equally spaced sequential movement of said applicator on a plane parallel to said surface, allowing said surface, and curing the resulting coating by means of radiation to form a thin, even, optically transparent polymeric protective layer over said surface.

2. A process according to Claim 1 in which the information storage device is a disc.

3. A process according to Claim 1 wherein said coating composition comprises one or more of tripropylene glycol diacrylate, tetraethylene glycol diacrylate, neopentyl glycol diacrylate, ethylene glycol diacrylate, diethylene glycol diacrylate, neopentyl glycol di(beta-acryloxypropionic acid), and diethylene glycol dimethacrylate.

4. A process according to Claim 1 or 2 wherein said coating composition comprises epoxy monomer capable of polymerizing by cationic ring opening.

5. A process according to any preceding claim wherein said applicator moves in a repeated incremental spiral manner.

6. A process according to any preceding claim wherein the distance between said applicator and the surface is not more than 25 centimeters.

7. A process according to any preceding claim wherein said radiation is ultra violet radiation.

8. A process according to any preceding claim wherein the coating composition has a viscosity of from 0.005 to 0.5 Pas (5 to 500 centipoises) (at 25°C using a Brookfield Viscometer).

**Patentansprüche**

1. Verfahren zur Bildung einer optische transparenten polymeren Schutzschicht auf der Oberfläche einer Informationsspeicherungsvorrichtung, welches darin besteht, die Vorrichtung mit der zu behandelnden Oberfläche in eine stationäre horizontale Position zu bringen, eine durch Strahlung härtbare flüssige Beschichtungsmasse auf die stationäre Oberfläche aus einer Auftragungsvorrichtung aufzubringen, die sich in einem Abstand von der Oberfläche sowie oberhalb der Oberfläche befindet, die Überzugsmasse durch eine abstandsgleich sequentielle Bewegung der Auftragungsvorrichtung auf einer Ebene parallel zu der Oberfläche aufzubringen, die flüssige Überzugsmasse sich gleichmäßig auf der Oberfläche ausbreiten zu lassen und den erhaltenen Überzug mittels einer Strahlung unter Bildung einer dünnen, ebenen und optisch transparent polymeren Schutzschicht auf der Oberfläche zu härten.

2. Verfahren nach Anspruch 1, wobei die Informationsspeicherungsvorrichtung eine Platte ist.

3. Verfahren nach Anspruch 1, wobei die Beschichtungsmasse aus einer oder mehreren der Substanzen Tripropylenglykoldiacrylat, Tetraethylenglykoldiacrylat, Neopentylglykoldiacrylat, Ethylenglykoldiacrylat, Diethylenglykoldiacrylat, Neopentylglykoldi(beta-acryloxypropionsäure) und Diethylenglykoldimethcryhlat besteht.

4. Verfahren nach Anspruch 1 oder 2, wobei die Beschichtungsmasse ein Epoxymonomers aufweist, welches dazu in der Lage ist, durch kationische Ringöffnung zu polymerisieren.

5. Verfahren nach einem der vorhergehenden Ansprüche, wobei sie die Auftragungsvorrichtung in einer wiederholten inkrementellen spiralenförmigen Weise bewegt.

6. Verfahren nach einem der vorhergehenden Ansprüche, wobei der Abstand zwischen er Auftragungsvorrichtung und der Oberfläche nicht mehr als 25 cm beträgt.

7. Verfahren nach einem der vorhergehenden Ansprüche, wobei die Strahlung eine ultraviolette Strahlung ist.

8. Verfahren nach einem der vorhergehenden Ansprüche, wobei die Überzugsmasse eine Viskosität von 0,005 bis 0,5 Pa.s (5 bis 500 Centipoise) (bei 25°C unter Verwendung eines Brookfield Viskosimeters) besitzt.

## Revendications

1. Un procédé pour former une couche polymère protectrice optiquement transparente sur la surface d'un dispositif de mémorisation de l'information, qui comprend la mise en place du dispositif avec la surface à traiter dans une position horizontale stationnaire, l'application d'une composition de revêtement liquide durcissable par irradiation à la surface stationnaire à l'aide d'un applicateur situé à distance de ladite surface eet au-dessus de cell-ci, l'application de ladite composition de revêtement par un mouvement séquentiel également espacé dudit applicateur dans un plan parallèle à ladite surface, en laissant ladite composition de revêtement liquide s'étaler régulièrement sur ladite surface, et le durcissement du revêtement obtenu à l'aide d'un rayonnement pour former une couche polymère protectrice mince, régulière et optiquement transparente sur ladite surface.

2. Un procédé selon la revendication 1, dans lequel le dispositif de mémorisation de l'information est un disque.

3. Un procédé selon la revendication 1, dans lequel ladite composition de revêtement comprend un ou plusieurs du diacrylate de tripropylèneglycol, diacrylate de tétraéthylèneglycol, diacrylate de néopentylglycol, diacrylate d'éthylèneglycol, diacrylate de diéthylèneglycol, néopentylglycol-di($\beta$-acryloxypropionique) et diméthacrylate de diéthylèneglycol.

4. Un procédé selon la revendication 1 ou 2, dans lequel ladite composition de revêtement comprend un monomère de type époxy susceptible de polymérisation par décyclisation cationique.

5. Un procédé selon l'une quelconque des revendications précédentes, dans lequel ledit applicateur se déplace selon un mouvement spiral par accroissement répété.

6. Un procédé selon l'une quelconque des revendications précédentes, dans lequel la distance entre ledit applicateur et la surface ne dépasse pas 25 centimètres.

7. Un procédé selon l'une quelconque des revendications précédents, dans lequel ledit rayonnement est un rayonnement ultraviolet.

8. Un procédé selon l'une quelconque des revendications précédentes, dans lequel la composition de revêtement a une viscosité de 0,005 à 0,5 Pa.s (5 à 500 centipoises) (à 25°C avec un Viscometer Brookfield).